# EUROPÄISCHE PATENTSCHRIFT

(11) **EP 0 703 520 B1**
(45) Veröffentlichungstag und Bekanntmachung des Hinweises auf die Patenterteilung: **07.01.1998**
(21) Anmeldenummer: 95112034.4
(22) Anmeldetag: 31.07.1995
(51) Int. Cl.: G05G 1/06

(54) **Schalthebel für ein Kraftfahrzeuggetriebe**
Gear shift lever for a motor vehicle gearbox
Levier de changement de vitesses pour véhicules

(30) Priorität: 24.09.1994 DE 4434135
(43) Veröffentlichungstag der Anmeldung: 27.03.1996
(73) Patentinhaber: Bayerische Motoren Werke Aktiengesellschaft, 80788 München (DE)
(72) Erfinder: Woeste, Norbert, D-80939 München (DE)

(56) Entgegenhaltungen:
- EP-A- 0 194 703
- DE-A- 4 217 500
- DE-U- 8 530 696
- FR-A- 2 607 605
- GB-A- 2 253 446
- US-A- 2 272 897
- US-A- 4 991 461

## Beschreibung

Die Erfindung bezieht sich auf einen Schalthebel für ein Kraftfahrzeuggetriebe nach dem Oberbegriff des Hauptanspruchs.

Bei derartig bekannten, in Kraftfahrzeugen der Anmelderin verbauten Schalthebeln wird die Innenbohrung für die Aufnahme der Schalthebelstange von einer in dem Schaltgriff angeordneten Hülse gebildet. Das untere Ende der Hülse geht in die federnden Rastzungen über, die in eine entsprechende Ringnut des Schalthebels eingreifen. Aufgrund dieser Konstruktion ist die Schalthebelstange oben durch die Innenwandung der Hülse und unten durch die eingreifenden Rastzungen geführt. In den Schaltgriff eingeleitete Kräfte bewirken dadurch ein Auffedern der Rastzungen, da der Schaltgriff im Bereich der oberen Führung gegenüber der Schalthebelstange kippt. Die Rastzungen sind daher entsprechend steif auszulegen. Dies wiederum aber führt zu dem Nachteil, daß der Schaltgriff im Montage- oder Demontagefall nur mit großem Kraftaufwand von der Schalthebelstange abgezogen werden kann.

Weiterhin zeigt die DE-A-4 217 500 einen gattungsähnlichen Schalthebel, bei dem eine Schalthebelstange mit einem Hülsenteil verrastet ist, wobei die Schalthebelstange ober- und unterhalb der gezeigten Verrastung in der Innenbohrung paßgenau geführt ist.

Aufgabe der Erfindung ist es daher, einen derart bekannten in Kraftfahrzeugen der Anmelderin verbauten Schalthebel so weiterzubilden, daß einerseits der Schaltgriff sicher auf der Schalthebelstange gehalten ist, andererseits aber die Abzugskräfte in vertretbaren Grenzen gehalten werden.

Die Aufgabe wird erfindungsgemäß gelöst mit den kennzeichnenden Merkmalen des Hauptanspruchs. Weitere Ausgestaltungen der Erfindung ergeben sich aus den Unteransprüchen.

Nach der Erfindung ist demnach die Schalthebelstange am oberen und unteren Ende der Hülse geführt, während dazwischen die Rastzungen angeordnet sind. Auf diese Weise stützen sich eingeleitete Kräfte sowohl oben als auch unten ab, ohne daß sie dabei mit einer Kraftkomponente auf die Rastzungen wirken. Die Rastzungen können demnach allein nach dem Erfordernis einer vertretbaren Abzugskraft bzw. eines sicheren Sitz des Schaltgriffs dimensioniert werden.

In einer zweckmäßigen Ausführung sind die Rastzungen aus der Hülsenwand einer im Schaltgriff eingesetzten Aufnahmehülse geformt. Im einfachsten Fall läßt sich dies mit U-förmigen bzw. V-förmigen Freischnitten innerhalb der Hülsenwand erreichen.

Um eine sichere Verbindung auf der Schalthebelstange zu gewährleisten, können darüber hinaus die Rastzungen, ähnlich wie im Stand der Technik Rastnasen aufweisen, die in eine entsprechende Ringnut der Schalthebelstange eingreifen. Die Rastnasen erstrecken sich dabei in Umfangsrichtung, während die Schenkel der U-förmigen bzw. V-förmigen Freischnitte zur Hülsenlängsachse ausgerichtet sind.

Ein solcher Schalthebel eignet sich sowohl für ein Automatikgetriebe, bei dem also die Fahrstufen vorgewählt und die einzelnen Gänge automatisch eingelegt werden, als auch für ein sogenanntes Handschaltgetriebe, bei dem der Fahrer den jeweiligen Gang direkt über den Schalthebel einlegt. Im Falle des Automatikgetriebes tritt in der Regel nur eine Betätigungsrichtung, nämlich in Fahrzeuglängsrichtung auf. In diesem Fall ist es zweckmäßig, die Rastzungen senkrecht zu dieser Betätigungsrichtung anzuordnen, da es auf diese Weise möglich ist, das Schalthebelende in Bezug auf die Ebene der Betätigungsrichtung auf seiner ganzen Länge zu führen.

Weitere Vorteile der Erfindung ergeben sich aus der nachfolgenden Beschreibung eines Ausführungsbeispiels und der dazugehörigen Zeichnung. Es zeigen:
- Figur 1: den oberen Teil eines Schalthebels für ein automatisches Kraftfahrzeuggetriebe und
- Figur 2: eine Teilansicht entsprechend dem Pfeil I nach Figur 1.

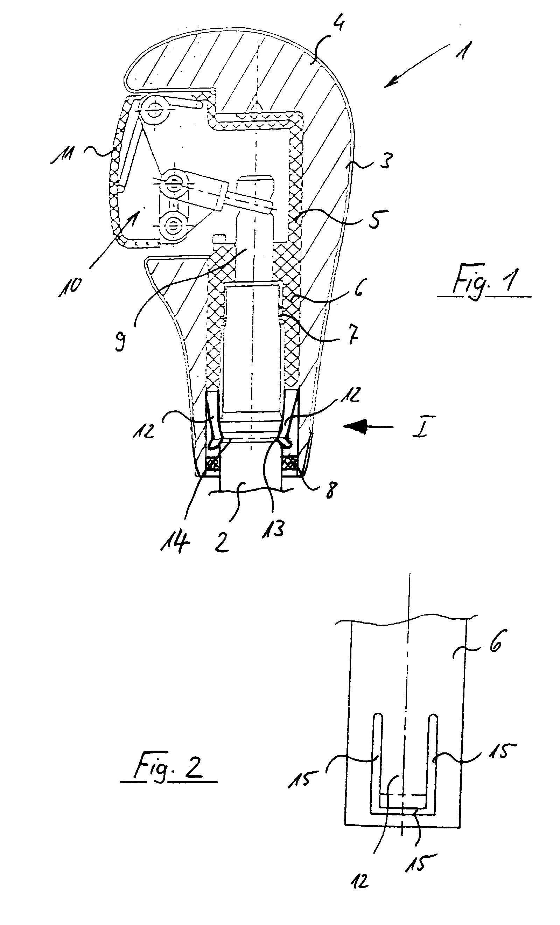

Ein nur teilweise dargestellter Schalthebel 1 für ein nicht weiter dargestelltes automatisches Kraftfahrzeuggetriebe besteht aus einem in Figur 1 angedeuteten Schalthebelstange 2 und einem auf das Ende der Schalthebelstange 2 aufgesetzten Schaltgriff 3. Der Schaltgriff 3 weist eine äußere Ummantelung 4 auf, in die ein Einsatz 5 eingebettet ist. Der Einsatz 5 geht im Bereich der eingesetzten Schalthebel stange 2 in eine Aufnahmehülse 6 über.

Die Hülsenwand bildet die Innenbohrung im Sinne der Erfindung. Der Innendurchmesser der Hülse ist dabei auf den Außendurchmesser der Schalthebel stange 2 abgestimmt und zwar in der Weise, daß sie zwei Führungen, eine obere Führung 7 und eine untere Führung 8, aufweist, die mit der Mantelfläche der Schalthebelstange 2 in gleitender Passführung stehen. Gleitende Passführung soll in diesem Zusammenhang bedeuten, daß der Schaltgriff ohne merklichen Widerstand über das Ende der Schalthebelstange geschoben werden kann. Es soll jedoch kein Spiel auftreten.

Die Schalthebelstange 2 ist desweiteren gelenkig an einem nicht gezeichneten fahrzeugfesten Lagerbock gehalten. Außerdem nimmt sie axial verschiebbar eine Raststange 9 auf, die (ebenfalls nicht dargestellt) mit einer fahrzeugfesten Kulisse zusammenarbeitet. Die Raststange 9 kann durch eine Drucktaste 11 und über einen insgesamt mit 10 bezeichneten Mechanismus nach oben bewegt werden, so daß sich der Schalthebel 1 verstellen läßt, beispielsweise in der Zeichnungsebene von links nach rechts oder in die Zeichnungsebene hinein.

Die Festlegung des Schaltgriffes 1 auf der Schalthebelstange 2 geschieht über federnde Rastzungen 12, die mit in Umfangsrichtung verlaufenden Rastnasen 13 in eine Ringnut 14 der Schalthebelstange 2 eingreifen.

In Figur 2 ist in Blickrichtung des Pfeiles I die rechten Rastzunge 12 dargestellt. Sie ist aus der Wand der Hülse 6 geformt und zwar in der Weise, daß ein U-förmiger Freischnitt 15, bei dem die U-Schenkel in Hülsenlängsachse verlaufen, die Rastzunge 12 bildet. Um den so gebildeten Rastzungen federnde Eigenschaften zu verleihen, muß das Material der Hülse entsprechend gewählt werden. Im einfachsten Fall besteht sie aus einem geeigneten Kunststoff. Außerdem können die Rastzungen 12 etwas nach innen gebogen sein. Dies und auch die Anformung der Rastnase kann dann nicht allein durch den beschriebenen Freischnitt erreicht werden. Das Teil wird in diesem Fall durch Spritzgießen oder in ähnlicher Weise hergestellt.

Anstelle des U-förmigen Freischnitts ist auch ein V-förmiger oder ein ähnlich gestalteter Freischnitt möglich. Die Anzahl der Rastzungen über den Umfang verteilt richtet sich nach den jeweiligen Bedürfnissen.

Beim Montieren des Schalthebels wird der Schaltgriff 3 auf das Ende der bereits mit der Raststange 9 bestückten Schalthebelstange 2 aufgeschoben. Die Rastzungen 12 gleiten mit ihren Rastnasen 13 entlang der Schalthebelstange 2 bis sie in die Ringnut 14 einschnappen. Die Führung selbst wird von den beiden Führungen 7 und 8 übernommen.

Werden Kräfte über den Schaltgriff eingeleitet, stützen sie sich an den Führungen 7 und 8 ab, nicht jedoch an den Schaltzungen 12. Diese können daher so dimensioniert werden, daß sich einerseits beim normalen Gebrauch des Schalthebels 1 der Schaltgriff 4 nicht von der Schalthebelstange löst, andererseits beim gewollten Demontieren der Schaltgriff mit vertretbarer Kraft abgezogen werden kann.

## Patentansprüche

1. Schalthebel für ein Kraftfahrzeuggetriebe mit einer Schalthebelstange (2), die zum Schalten der einzelnen Gänge oder Fahrstufen gelenkig an einem fahrzeugfesten Lagerbock angeordnet ist und die an ihrem in den Fahrzeuginnenraum ragenden Endabschnitt einen lösbar an ihr befestigten Schaltgriff (3) in der Weise aufnimmt, daß das Schalthebelende in eine Innenbohrung des Schaltgriffs eingeführt und über aus der Bohrungswand geformte, federnd gegen die Schalthebelstange drückende Rastzungen (12) gehalten ist,
**dadurch gekennzeichnet,**
daß das Ende der Schalthebelstange (2) mit Spiel in der Innenbohrung aufgenommen ist und oberhalb und unterhalb der Rastzungen (12) in der Innenbohrung durch jeweils eine Führungsstelle (7, 8) geführt ist.

2. Schalthebel nach Anspruch 1, bei dem die Innenbohrung durch eine in den Schaltgriff (3) eingesetzte Hülse (5) gebildet ist, wobei die Rastzungen (12) Teil der Hülsenwand sind und gegen die Schalthebelstange (2) gerichtete in Umfangsrichtung verlaufende Rastnasen (13) aufweisen, die in eine Ringnut (14) der Schalthebelstange eingreifen, **dadurch gekennzeichnet,** daß die Rastzungen (12) durch U- oder V-ähnliche, in Hülsenlängsachse ausgerichtete Freischnitte (15) aus der Hülsenwand gebildet sind.

3. Schalthebel nach Anspruch 2, **dadurch gekennzeichnet,** daß die Rastzungen (12) in etwa senkrecht zur Betätigungsrichtung des Schalthebels (1) angeordnet sind.

## Claims

1. A gearshift lever for a motor vehicle gearbox with a gearshift lever shaft (2) which is articulated on a bearing block secured to the vehicle for switching between individual gears or speeds and which bears a gearshift lever knob (3), in a detachable manner, on its end projecting into the interior of the vehicle, with the end of the gearshift lever introduced into an internal bore of the gearshift lever knob and held by resilient snap-in pins (12) moulded from the bore wall and pressing against the gearshift lever shaft,
**characterised in that**
the end of the gearshift lever shaft (2) is accommodated with play in the inner bore and is guided above and below the snap-in pins (12) in the inner bore in each case through a guide point (7, 8).

2. A gearshift lever according to claim 1, in which the inner bore is formed by a shell (5) inserted in the gearshift lever knob (3), with the snap-in pins (12) forming part of the shell wall and provided with aligned detents (13) extending in a circumferential direction and engaging in an annular groove (14) of the gearshift lever shaft, **characterised in that** the snap-in pins (12 are formed from the shell wall through U-shaped, V-shaped or similar relief-cuts (15) aligned along the longitudinal axis of the shell.

3. A gearshift lever according to claim 2, **characterised in that** the snap-in pins (12) are arranged approximately perpendicularly to the direction of actuator of the gearshift lever (1).

## Revendications

1. Levier de changement de vitesses pour véhicules automobiles, comportant une tige de levier (2) qui, pour changer les vitesses ou les étapes de marche, est articulé à un support fixé au véhicule et qui a son extrémité située dans l'habitacle, porte une poignée de manoeuvre (3) montée de manière amovible, par introduction de l'extrémité du levier dans un alésage interne de la poignée et maintien par des languettes d'arrêt (12) formées à partir de la paroi de l'alésage et en pression élastique sur la tige du levier,
caractérisé en ce que
l'extrémité de la tige de levier (2) est logée avec du jeu dans l'alésage interne et guidée dans cet alésage, au-dessus et en dessous des languettes (12), par des zones de guidage (7, 8).

2. Levier de changement de vitesses selon la revendication 1, dont l'alésage interne est constitué par une douille (5) insérée dans la poignée (3) et dont les languettes d'arrêt (12) sont des parties de la paroi de la douille et présentent des saillies d'arrêt (13) qui s'étendent périphériquement et sont en prise dans une gorge annulaire (14) de la tige du levier,
caractérisé en ce que
les languettes d'arrêt (12) sont disposées à peu près perpendiculairement à la direction de manoeuvre du levier de changement de vitesses.

3. Levier de changement de vitesses selon la revendication 2,
caractérisé en ce que
les languettes d'arrêt (12) sont disposées à peu près verticalement par rapport à l'installation d'actionnement du levier de changement de vitesses (1).
